# EUROPEAN PATENT APPLICATION

(11) **EP 4 718 582 A1**
(43) Date of publication of application: **01.04.2026**
(21) Application number: 25170191.8
(22) Date of filing: 11.04.2025
(51) Int. Cl.: H01M 10/613, H01M 10/6567, H01M 50/204, H01M 50/291, H01M 50/296, H01M 50/503, H01M 50/507

(54) **IMMERSION ENERGY STORAGE DEVICE**

(30) Priority: 27.09.2024 CN 202422386414 U; 03.12.2024 WO PCT/CN2024/136314
(71) Applicant: Eve Energy Storage Co., Ltd, Wuhan, Hubei 430000 (CN)
(72) Inventor: HOU, Zian, Wuhan, Hubei, 430000 (CN); YI, Haohao, Wuhan, Hubei, 430000 (CN); ZHUO, Wei, Wuhan, Hubei (CN); LIU, Jianbo, Wuhan, Hubei, 430000 (CN)
(74) Representative: Biallo, Dario

(57) **Abstract**

Provided is an immersion energy storage device which relates to the field of energy storage technology. The immersion energy storage device includes a cabinet (300), at least two battery modules (200) stacked in a first direction and a connector (100). An output terminal of the battery module (200) extends beyond an outer end surface of the battery module (200) in a second direction, and the output terminal of the battery module (200) has a first abutting surface (2121). Two opposite ends of a connecting body (120) of the connector (100) are each provided with a bending structure (110), and the bending structure (110) has a second abutting surface (1121). The bending structure (110) is threadedly fixed to the output terminal of the battery module (200), and the first abutting surface (2121) abuts against the second abutting surface (1121).

## Description

### TECHNICAL FIELD

The present application relates to the field of energy storage technology, for example, to an immersion energy storage device.

### BACKGROUND

Multiple battery modules and a control system are arranged in an immersion energy storage cabinet, and the multiple battery modules and the control system are all immersed in insulating coolant. The multiple battery modules are connected by wiring harnesses, and the control system can control the charging and discharging of each battery module, thereby realizing energy storage and release.

In the related art, since the battery modules and the control system are all immersed in the insulating coolant, during the circulation of the insulating coolant, the wiring harness immersed in the insulating coolant will shake under the drive of the insulating coolant, causing the connection port between the wiring harness and the battery module to loosen, which may adversely affect the normal charging and discharging of the battery module. In the related art, in order to ensure the normal operation of the battery module, a busbar is used to replace the wiring harness to connect the battery modules.

### SUMMARY

In response to using a busbar to connect two modules stacked in the vertical direction, it is necessary to insert a hand and bolts into the space between the two battery modules stacked up and down to perform the fixation between the busbar and the poles. Therefore, when designing an immersion energy storage cabinet, a large enough space must be reserved between the two battery modules stacked up and down, resulting in a low space utilization rate of the immersion energy storage cabinet.

An immersion energy storage device is provided according to the present application, to achieve a stable connection of the battery modules and improve the space utilization rate of the immersion energy storage device.

An immersion energy storage cabinet according to the present application includes a cabinet, at least two battery modules stacked in a first direction and a connector.

The cabinet has an accommodation chamber configured to accommodate an insulating coolant.

The at least two battery modules stacked in the first direction are immersed in the insulating coolant. For each battery module of at least two battery modules, an output terminal of the battery module extends beyond an outer end surface of the battery module in a second direction, and the output terminal of the battery module has a first abutting surface.

The connector is a rigid structure, and the connector includes a connecting body, a bending structure and an insulating structure. Two opposite ends of the connecting body are each provided with a bending structure, where for each bending structure, the bending structure has a second abutting surface, and the insulating structure wraps around a portion of the bending structure other than the second abutting surface.

The bending structure is fixed to the output terminal of the battery module using screw threads, and the first abutting surface abuts against the second abutting surface.

The immersion energy storage device according to the present application can achieve effective heat dissipation of the battery modules by providing the accommodation chamber in a cabinet to accommodate the insulating coolant and immersing the battery modules in the insulating coolant. The output terminal of the battery module extends beyond the outer end surface of the battery module in the second direction, and the connector composed of the connecting body and the bending structures provided at opposite ends of the connecting body is provided. The two bending structures in the connector are threadedly fixed to the output terminals of the battery modules, respectively, to allow the first abutting surfaces of the output terminals of the battery modules to abut against the second abutting surfaces of the bending structures, thereby connecting the battery modules in series or in parallel. Moreover, after the connector of the rigid structure is threadedly fixed to the battery modules, it will not shake since being driven by the circulating insulating coolant. Thus, not only the connection stability between the connector and the battery module can be ensured and the normal operation of the battery module can be ensured, but also the structure is simple, and disassembly and assembly between the battery module and the connector are easy. By wrapping the insulating structure on the outside of the bending structure, the safety of disassembly and assembly between the battery module and the connector can be ensured. Furthermore, since the output terminal of the battery module is connected and fixed to the connector from one end of the battery module in the second direction, it is ensured that there is an angle between the first direction and the second direction, and the gap between the battery modules in the first direction can be effectively reduced, thereby improving the energy density and space utilization rate of the accommodation chamber in the cabinet.

### BRIEF DESCRIPTION OF THE DRAWINGS

FIG. 1 is a schematic structural diagram of an immersion energy storage device according to some embodiments of the present application;
FIG. 2 is a structural diagram of an immersion energy storage device according to some embodiments of the present application;
FIG. 3 is a schematic exploded view of a battery module and a connector according to some embodiments of the present application;
FIG. 4 is a schematic structural diagram of a bending structure and a connecting body according to some embodiments of the present application;
FIG. 5 is a schematic partially enlarged view of part A in FIG. 3;
FIG. 6 is a first schematic structural diagram of a connector according to some embodiments of the present application;
FIG. 7 is a second schematic structural diagram of a connector according to some embodiments of the present application; and
FIG. 8 is a schematic cross-sectional view of a second bending portion and an insulating structure according to some embodiments of the present application.

### Reference numerals in the drawings:

100 connector
110 bending structure
111 first bending portion
112 second bending portion
1121 second abutting surface
1122 first threaded through hole
120 connecting body
130 insulating structure
131 mounting seat
1311 first accommodation through hole
1312 rib
140 fixing bolt
200 battery module
210 busbar
211 third bending portion
212 fourth bending portion
2121 first abutting surface
2122 second threaded through hole
220 battery cell
230 positioning member
231 first accommodation recess
232 second accommodation recess
2321 first threaded blind hole
240 connection member
300 cabinet
310 accommodation chamber

### DETAILED DESCRIPTION

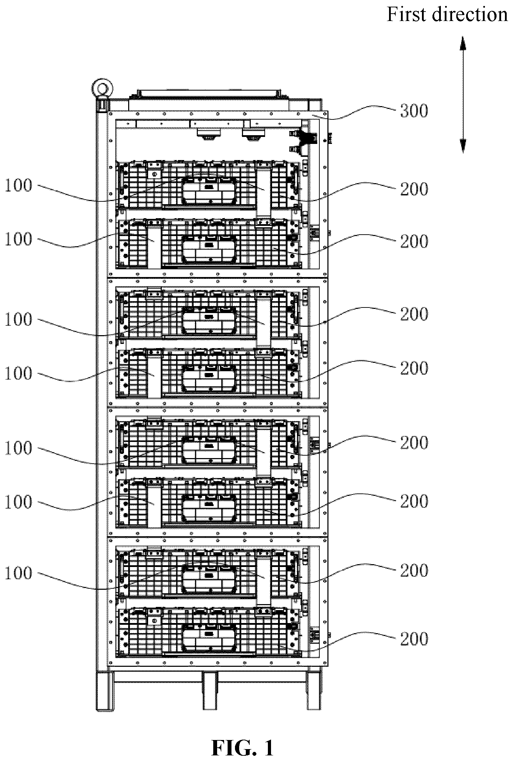

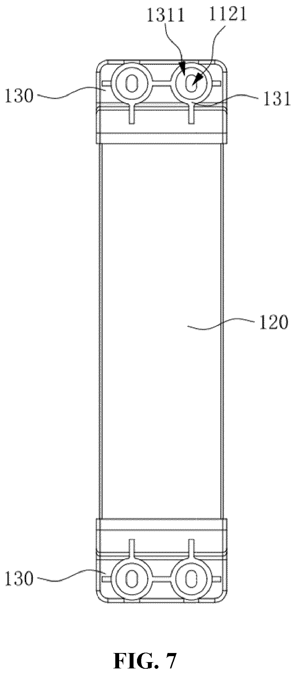

As shown in FIG. 1 to FIG. 7, an immersion energy storage cabinet is provided according to this embodiment. The immersion energy storage cabinet includes a cabinet 300, at least two battery modules 200 stacked in a first direction and a connector 100. The cabinet 300 has an accommodation chamber 310 configured to accommodate an insulating coolant. The at least two battery modules 200 stacked in the first direction are immersed in the insulating coolant. For each battery module of at least two battery modules, an output terminal of the battery module 200 extends beyond an outer end surface of the battery module 200 in a second direction, and the output terminal of the battery module 200 has a first abutting surface 2121. The connector 100 is a rigid structure, and the connector 100 includes a connecting body 120, a bending structure 110 and an insulating structure 130. Two opposite ends of the connecting body 120 are each provided with a bending structure 110, where for each bending structure, the bending structure 110 has a second abutting surface 1121, and the insulating structure 130 wraps around a portion of the bending structure 110 other than the second abutting surface 1121. The bending structure 110 is fixed to the output terminal of the battery module 200 using screw threads, and the first abutting surface 2121 abuts against the second abutting surface 1121.

The immersion energy storage device can achieve effective heat dissipation of the battery modules 200 by providing the accommodation chamber 310 in a cabinet 300 to accommodate the insulating coolant and immersing the battery modules 200 in the insulating coolant. The output terminal of the battery module 200 extends beyond the outer end surface of the battery module 200 in the second direction, and the connector 100 composed of the connecting body 120 and the bending structures 110 provided at opposite ends of the connecting body 120 is provided. The two bending structures 110 in the connector 100 are threadedly fixed to the output terminals of the battery modules 200, respectively, to allow the first abutting surfaces 2121 of the output terminals of the battery modules 200 to abut against the second abutting surfaces 1121 of the bending structures 110, thereby connecting the battery modules 200 in series or in parallel. The word "threadedly" means using screw threads. Moreover, after the connector 100 of the rigid structure is threadedly fixed to the battery modules 200, it will not shake since being driven by the circulating insulating coolant. Thus, not only the connection stability between the connector 100 and the battery module 200 can be ensured and the normal operation of the battery module 200 can be ensured, but also the structure is simple, and disassembly and assembly between the battery module and the connector are easy. By wrapping the insulating structure 130 on the outside of the bending structure 110, the safety of disassembly and assembly between the battery module 200 and the connector 100 can be ensured. Furthermore, since the output terminal of the battery module 200 is connected and fixed to the connector 100 from one end of the battery module 200 in the second direction, it is ensured that there is an angle between the first direction and the second direction, and the gap between the battery modules 200 in the first direction can be effectively reduced, thereby improving the energy density and space utilization rate of the accommodation chamber 310 in the cabinet 300. In some embodiments, the connecting body 120 and the bending structure 110 in the connector 100 are both made of copper. Copper not only has good conductivity but also is easy to bend and process. In other embodiments, the connecting body 120 and the bending structure 110 may also be made of other metal materials.

In some embodiments, the first direction is the vertical direction, the second direction is the front-to-back direction in the horizontal plane, and the angle between the first direction and the second direction is a right angle, so that the battery modules 200 in the immersion energy storage device are stacked and arranged in the vertical direction, and the output terminal of each of the battery modules 200 extends beyond the outer end surface of the respective battery module 200 in the front-to-back direction, and the bending structure 110 in the connector 100 is threadedly fixed to the output terminal of the battery module 200 in the front-to-back direction. In other embodiments, the specific orientations of the first direction and the second direction can also be adjusted according to practical requirements, and it is only necessary to ensure that there is an angle between the first direction and the second direction.

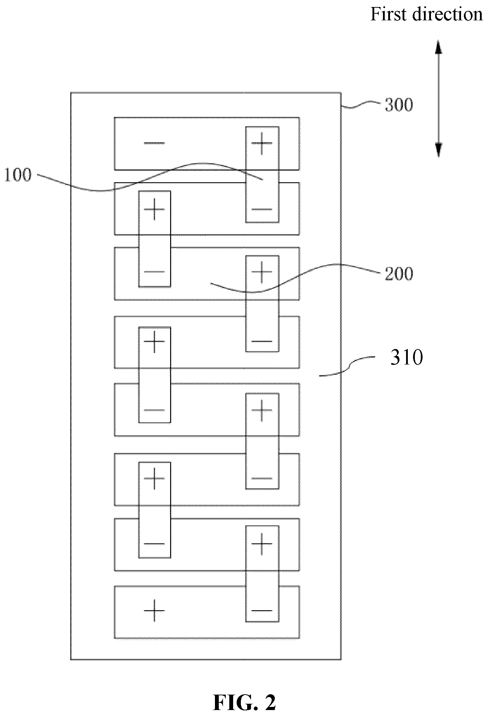

In an optional embodiment, as shown in FIG. 1 and FIG. 2, the output terminals of two adjacent battery modules 200 are directly opposite to each other in the first direction, and the two bending structures 110 of the connector 100 are fixedly connected to the output terminals of the two adj acent battery modules 200 respectively. According to the calculation formula of resistance, Joule's law and the law of conservation of energy, it can be known that the longer the connector 100, the more heat energy the connector 100 generates, and the more the wasted electric energy. By ensuring that the output terminals of two adjacent battery modules 200 are directly opposite to each other in the first direction, the size of the connector 100 can be shortened, and the length of the connector 100 is reduced to the greatest extent, which not only saves costs and improves the energy utilization rate of the immersion energy storage device, but also makes the internal structure of the immersion energy storage device neater and more beautiful.

In some embodiments, the immersion energy storage device includes eight battery modules 200 stacked in the first direction. The positive output terminal and the negative output terminal of two adjacent battery modules 200 are directly opposite to each other in the first direction, and the connector 100 is configured to connect the positive output terminal and the negative output terminal of the two adjacent battery modules 200 to connect eight battery modules 200 in series. In other embodiments, the specific number of battery modules 200 can also be adjusted according to practical requirements.

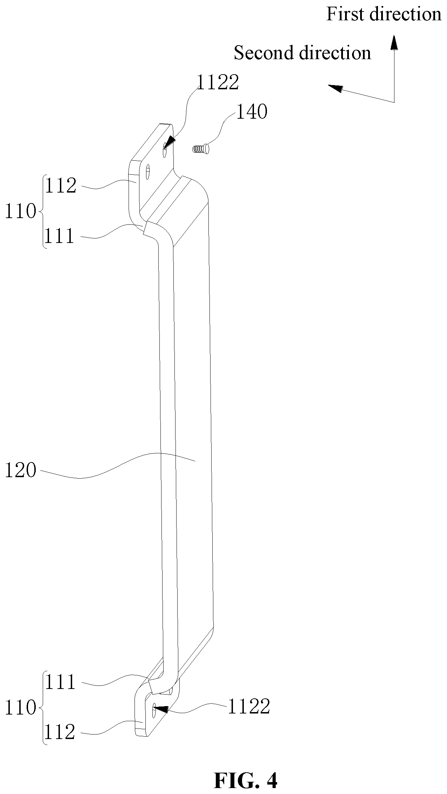

As shown in FIG. 4, the bending structure 110 includes a first bending portion 111 and a second bending portion 112. The first bending portion 111 is connected to the connecting body 120, and the extension direction of the first bending portion 111 is perpendicular to the extension direction of the connecting body 120. The second bending portion 112 is connected to an end of the first bending portion 111 away from the connecting body 120, the extension direction of the second bending portion 112 is parallel to the extension direction of the connecting body 120, and the second bending portion 112 has the second abutting surface 1121. By connecting the two opposite ends of the first bending portion 111 to the second bending portion 112 and the connecting body 120 respectively, arranging the extension direction of the first bending portion 111 to be perpendicular to the extension direction of the connecting body 120, and arranging the extension direction of the second bending portion 112 to be parallel to the extension direction of the connecting body 120, the second abutting surface 1121 on the second bending portion 112 and the end surface of the connecting body 120 can be spaced apart, so that the second abutting surface 1121 can easily abuts against the first abutting surface 2121 on the output terminal of the battery module 200.

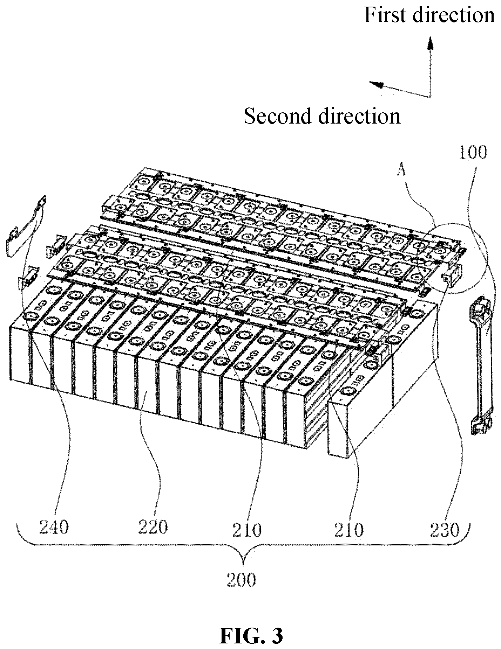

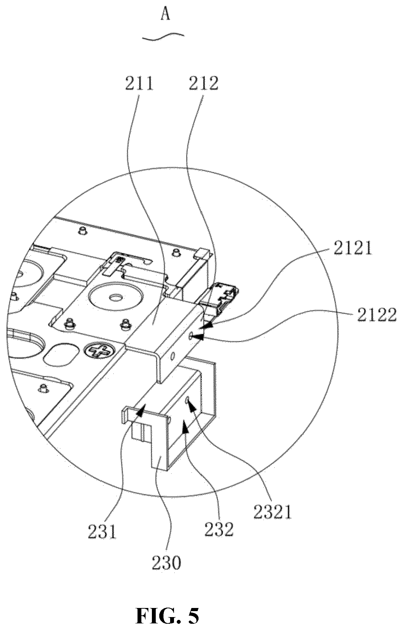

The structure of the battery module 200 is described in conjunction with FIG. 3 and FIG. 5. The battery module 200 includes at least two battery cells 220 and a busbar 210, where the busbar 210 is configured to connect the battery cells 220 in series or in parallel. An output terminal of the busbar 210 is provided with a third bending portion 211 and a fourth bending portion 212, the third bending portion 211 extends in the second direction and beyond the outer end surface of the battery module 200, the fourth bending portion 212 is connected to an end of the third bending portion 211 away from the busbar 210, and the fourth bending portion 212 extends in the first direction and has the first abutting surface 2121. The at least two battery cells 220 are connected in series or in parallel by using a busbar 210, and the third bending portion 211 and the fourth bending portion 212 are provided at the output terminal of the busbar 210, so that the third bending portion 211 extends in the second direction and extends beyond the outer end surface of the battery module 200, and the fourth bending portion 212 is connected to an end of the third bending portion 211 away from the busbar 210; and the fourth bending portion 212 extends in the first direction, and is provided with a first abutting surface 2121; thereby the first abutting surface 2121 can be fixedly connected to the second abutting surface 1121 on the second bending portion 112 at the side end of the battery module 200. In some embodiments, the fourth bending portion 212 extends downward in the first direction.

The battery module 200 further includes a positioning member 230, where the positioning member 230 is arranged on an outer end surface of the at least two battery cells 220, and the positioning member 230 is provided with a first accommodation recess 231 and a second accommodation recess 232 in communication with each other. The first accommodation recess 231 extends in the second direction, the second accommodation recess 232 is arranged at an end of the first accommodation recess 231 away from the battery cell 220, the first accommodation recess 231 is configured to accommodate the third bending portion 211, the second accommodation recess 232 extends in the first direction, and the second accommodation recess 232 is configured to accommodate the fourth bending portion 212. The first accommodation recess 231 extending in the second direction and the second accommodation recess 232 extending in the first direction are provided in the positioning member 230, the second accommodation recess 232 is arranged at an end of the first accommodation recess 231 away from the battery cell 220 and is in communication with the first accommodation recess 231, so that the first accommodation recess 231 accommodates the third bending portion 211, and the second accommodation recess 232 accommodates the fourth bending portion 212; thereby the third bending portion 211 and the fourth bending portion 212 can be positioned and fixed, which not only facilitates the subsequent contact between the first abutting surface 2121 and the second abutting surface 1121, but also can isolate the third bending portion 211 and the fourth bending portion 212 from the battery cell 220, avoids direct contact of the third bending portion 211 and the fourth bending portion 212 with the shell of the battery cell 220, and improves the protection for the battery cell 220. In some embodiments, the first direction is the vertical direction, the second direction is the front-to-back direction, and the fourth bending portion 212 extends downward in the vertical direction, so the positioning member 230 is arranged below the third bending portion 211 and the fourth bending portion 212, and the second accommodation recess 232 extends downward in the vertical direction from one end in communication with the first accommodation recess 231. In other embodiments, the fourth bending portion 212 can also extend upward in the vertical direction. In this case, it is simply required to arrange the positioning member 230 above the third bending portion 211 and the fourth bending portion 212, and to make the second accommodation recess 232 extend upward in the vertical direction from one end in communication with the first accommodation recess 231.

In some embodiments, the positioning member 230 is made of PA66 (polyamide 66) material, i.e., polyhexamethylene adipamide, commonly known as nylon 66, so that the dielectric strength of the positioning member 230 reaches 60kV/mm (kilovolts/millimeter) to ensure the insulation effect between the outer shell of the battery cell 220 and the third bending portion 211 and the insulation effect between the outer shell of the battery cell 220 and the fourth bending portion 212. In other embodiments, the positioning member 230 may also be made of other insulating materials.

In some embodiments, as shown in FIG. 3, each battery module 200 includes thirty battery cells 220, and the thirty battery cells 220 are divided into two groups, each group of battery cells 220 are stacked horizontally in the thickness direction of the battery cells 220, and the two groups of battery cells 220 are arranged in the length direction of the battery cells 220. In order to realize the series connection of the two groups of battery cells 220, the battery module 200 further includes a connection member 240. The battery module 200 has two busbars 210, each busbar 210 is arranged corresponding to a group of battery cells 220, and a first terminal of the connection member 240 is connected to the negative output terminal of any one of the two busbars 210, and a second terminal of the connection member 240 is connected to the positive output terminal of the other of the two busbars 210, so as to realize the series connection of the two groups of battery cells 220.

The connection member 240 is also provided with a structure identical to the bending structure 110 of the connector 100, so as to realize the series connection of two groups of battery cells 220 from the lateral side of the battery module 200.

In some implementations, as shown in FIG. 4 and FIG. 5, the second bending portion 112 is provided with a first threaded through hole 1122, the fourth bending portion 212 is provided with a second threaded through hole 2122, the first threaded through hole 1122 is in coaxial communication with the second threaded through hole 2122, and the immersion energy storage device further includes a fixing bolt 140 which is configured to threadedly pass through the first threaded through hole 1122 and the second threaded through hole 2122 in sequence. By providing the first threaded through hole 1122 in the second bending portion 112 and the second threaded through hole 2122 in the fourth bending portion 212, ensuring the first threaded through hole 1122 and the second threaded through hole 2122 to be in coaxial communication, and using the bolt to threadedly fix the first threaded through hole 1122 and the second threaded through hole 2122 in sequence, the contact the first abutting surface 2121 and the second abutting surface 1121 is achieved and the threaded fixation of the second bending portion 112 to the fourth bending portion 212 is achieved.

In some embodiments, the second bending portion 112 is provided with at least two first threaded through holes 1122 at intervals, and the fourth bending portion 212 is provided with at least two second threaded through holes 2122 at intervals, and each first threaded through hole 1122 is arranged corresponding to a second threaded through hole 2122 and a fixing bolt 140. By providing the at least two first threaded through holes 1122 at intervals in the second bending portion 112, and providing the at least two second threaded through holes 2122 at intervals in the fourth bending portion 212, each first threaded through hole 1122 is arranged corresponding to a respective second threaded through hole 2122 and a respective fixing bolt 140, the effect of at least two fixing bolts 140 connecting and fixing the second bending portion 112 to the fourth bending portion 212 can be achieved, thereby improving the fixing effect of the second bending portion 112 and the fourth bending portion 212. In some embodiments, the second bending portion 112 is provided with two first threaded through holes 1122 at intervals, and the fourth bending portion 212 is provided with two second threaded through holes 2122 at intervals, and each first threaded through hole 1122 is arranged corresponding to a second threaded through hole 2122 and a fixing bolt 140. In other embodiments, the specific number of the first threaded through holes 1122 and the second threaded through holes 2122 can also be adjusted according to practical requirements.

A recess wall opposite to the fourth bending portion 212 in the second accommodation recess 232 in the positioning member 230 is provided with a first threaded blind hole 2321. The first threaded blind hole 2321 is in coaxial communication with the first threaded through hole 1122 and the second threaded through hole 2122. The fixing bolt 140 is configured to threadedly pass through the first threaded through hole 1122 and the second threaded through hole 2122 in sequence and then threadedly fixed to the first threaded blind hole 2321, so as to ensure the fixing effect of the second bending portion 112 and the fourth bending portion 212 while ensuring the positioning effect of the positioning member 230 on the fourth bending portion 212. In other embodiments, if the positioning member 230 is provided with a first threaded blind hole 2321, the first threaded through hole 1122 and the second threaded through hole 2122 may not be provided with internal threads. In this case, the fixing bolt 140 only passes through the first threaded through hole 1122 and the second threaded through hole 2122, and the second bending portion 112 and the fourth bending portion 212 are clamped and fixed by the threaded fixing of the fixing bolt 140 to the first threaded blind hole 2321.

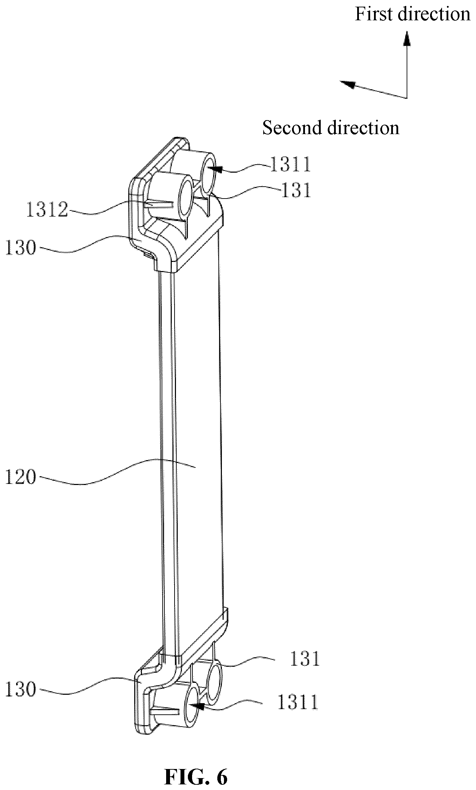

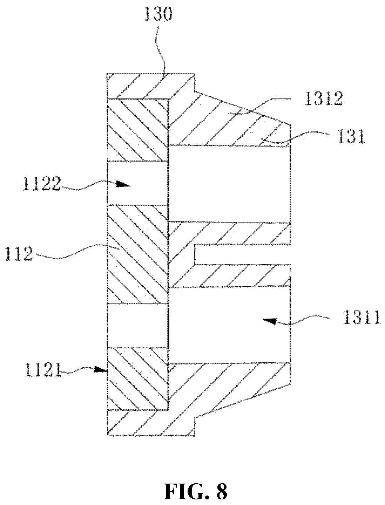

As shown in FIG. 6 to FIG. 8, a mounting seat 131 is provided on the insulating structure 130, and the mounting seat 131 protrudes in an axial direction of the first threaded through hole 1122 away from the first threaded through hole 1122. A first accommodation through hole 1311 is provided in the mounting seat 131, the first accommodation through hole 1311 is in coaxial communication with the first threaded through hole 1122, and the first accommodation through hole 1311 is configured to accommodate the head of the fixing bolt 140. By providing the mounting seat 131 on the insulating structure 130, and providing the first accommodation through hole 1311 to be in coaxial communication with the first threaded through hole 1122 in the mounting seat 131, and using the first accommodation through hole 1311 to accommodate the head of the fixing bolt 140, not only the protection for the fixing bolt 140 can be improved, but also when the fixing bolt 140 is used to connect and fix the second bending portion 112 to the fourth bending portion 212, the first accommodation through hole 1311 can further provide a guide for the connection of the fixing bolt 140 to the first threaded through hole 1122.

At least two ribs 1312 are arranged to be circumferentially spaced apart on an outer peripheral wall of the mounting seat 131. By arranging the at least two ribs 1312 to be circumferentially spaced apart on the outer peripheral wall of the mounting seat 131, the structural strength of the mounting seat 131 can be improved, and further the connection strength between the connector 100 and the battery module 200 can be improved. In some embodiments, three ribs 1312 are arranged to be circumferentially spaced apart on the outer peripheral wall of the mounting seat 131. In other embodiments, the specific number of ribs 1312 may also be adjusted according to practical requirements.

In some embodiments, since two first threaded through holes 1122 are provided in the second bending portion 112, two mounting seats 131 are provided on the insulating structure 130, and each mounting seat 131 is provided with a first accommodation through hole 1311, and each first accommodation through hole 1311 is in coaxial communication with the corresponding first threaded through hole 1122. In other embodiments, the specific number of mounting seats 131 may also be adjusted according to the specific number of first threaded through holes 1122, and it is only required to ensure that each first threaded through hole 1122 is arranged corresponding to the first accommodation through hole 1311 in one mounting seat 131.

In some embodiments, the insulating structure 130 is formed by injection molding, and the insulating structure 130 is detachably fixed to the bending structure 110. By processing the insulating structure 130 by injection molding, the processing accuracy and processing efficiency of the insulating structure 130 can be improved, and the specification consistency of the insulating structure 130 can be ensured. By detachably fixing the insulating structure 130 to the bending structure 110, the insulating structure 130 can be easily replaced, and the subsequent maintenance and replacement of the insulating structure 130 can be facilitated. In other embodiments, the insulating structure 130 may also be formed by other processing methods.

The insulating structure 130 in this embodiment is made of PA66 (polyamide 66) material, i.e., polyhexamethylene adipamide, commonly known as nylon 66. By processing the insulating structure 130 by injection molding, the dielectric strength of the insulating structure 130 can reach 60kV/mm, which effectively ensures the safety of use of the insulating structure 130. In other embodiments, the insulating structure 130 may also be made of other insulating materials.

In some embodiments, the immersion energy storage device further includes a circulating cooling component, where the circulating cooling component includes a circulating cooling element and two connecting pipes, the cabinet 300 is provided with a liquid inlet and a liquid outlet in communication with the accommodation chamber 310, any one of the two connecting pipes is set to communicate an output end of the circulating cooling element with the liquid inlet in the cabinet 300, and the other of the two connecting pipes is set to communicate an input end of the circulating cooling element with the liquid outlet in the cabinet 300, so that the insulating coolant that has been cooled in the circulating cooling element flows out from the output end and flows into the accommodation chamber 310 of the cabinet 300 along the connecting pipe and through the liquid inlet, and the insulating coolant that absorbs heat in the accommodation chamber 310 of the cabinet 300 flows out from the liquid outlet and flows into the circulating cooling component along the connecting pipe and through the input end of the circulating cooling component, thereby realizing the circulating flow of the insulating coolant between the accommodation chamber 310 of the cabinet 300 and the circulating cooling component.

## Claims

1. An immersion energy storage device, comprising:
a cabinet (300), having an accommodation chamber (310) configured to accommodate an insulating coolant;
at least two battery modules (200), stacked in a first direction and immersed in the insulating coolant, wherein for each battery module of at least two battery modules, an output terminal of the battery module (200) extends beyond an outer end surface of the battery module (200) in a second direction, and the output terminal of the battery module (200) has a first abutting surface (2121);
a connector (100), being a rigid structure, wherein the connector (100) comprises a connecting body (120), a bending structure (110) and an insulating structure (130), two opposite ends of the connecting body (120) are each provided with a bending structure (110), wherein for each bending structure, the bending structure (110) has a second abutting surface (1121), and the insulating structure (130) wraps around a portion of the bending structure (110) other than the second abutting surface (1121); and the bending structure (110) is fixed to the output terminal of the battery module (200) using screw threads, the first abutting surface (2121) abuts against the second abutting surface (1121), and an angle exists between the first direction and the second direction.

2. The immersion energy storage device according to claim 1, wherein the bending structure (110) comprises:
a first bending portion (111), connected to the connecting body (120), wherein an extension direction of the first bending portion (111) is perpendicular to an extension direction of the connecting body (120); and
a second bending portion (112), connected to an end of the first bending portion (111) away from the connecting body (120), wherein an extension direction of the second bending portion (112) is parallel to the extension direction of the connecting body (120), and the second bending portion (112) has the second abutting surface (1121).

3. The immersion energy storage device according to claim 1, wherein the battery module (200) comprises:
at least two battery cells (220); and
a busbar (210), wherein the busbar (210) is configured to connect the battery cells (220) in series or in parallel, and an output terminal of the busbar (210) is provided with a third bending portion (211) and a fourth bending portion (212), the third bending portion (211) extends in the second direction and extends beyond the outer end surface of the battery module (200), the fourth bending portion (212) is connected to an end of the third bending portion (211) away from the busbar (210), and the fourth bending portion (212) extends in the first direction and has the first abutting surface (2121).

4. The immersion energy storage device according to claim 3, wherein the battery module (200) further comprises:
a positioning member (230), arranged on an outer end surface of the at least two battery cells (220), wherein the positioning member (230) is provided with a first accommodation recess (231) and a second accommodation recess (232) that are in communication with each other; and
the first accommodation recess (231) extends in the second direction, the first accommodation recess (231) is configured to accommodate the third bending portion (211), the second accommodation recess (232) is arranged at an end of the first accommodation recess (231) away from the battery cell (220), the second accommodation recess (232) extends in the first direction, and the second accommodation recess (232) is configured to accommodate the fourth bending portion (212).

5. The immersion energy storage device according to claim 1, wherein the bending structure (110) is provided with a first threaded through hole (1122), the output terminal of the battery module (200) is provided with a second threaded through hole (2122), the first threaded through hole (1122) is in coaxial communication with the second threaded through hole (2122), and
the immersion energy storage device further comprises a fixing bolt (140), and the fixing bolt (140) is configured to pass through the first threaded through hole (1122) and the second threaded through hole (2122) in sequence using screw threads.

6. The immersion energy storage device according to claim 5, wherein a mounting seat (131) is provided on the insulating structure (130), the mounting seat (131) protrudes in an axial direction of the first threaded through hole (1122) to be away from the first threaded through hole (1122), a first accommodation through hole (1311) is provided in the mounting seat (131), the first accommodation through hole (1311) is in coaxial communication with the first threaded through hole (1122), and the first accommodation through hole (1311) is configured to accommodate a head of the fixing bolt (140).

7. The immersion energy storage device according to claim 6, wherein at least two ribs (1312) are arranged to be circumferentially spaced apart on an outer peripheral wall of the mounting seat (131).

8. The immersion energy storage device according to claim 5, wherein the bending structure (110) is provided with at least two first threaded through holes (1122) at intervals, and the output terminal of the battery module (200) is provided with at least two second threaded through holes (2122) at intervals, and each of the at least two first threaded through holes (1122) is arranged corresponding to a respective one of the at least two second threaded through holes (2122) and a respective one fixing bolt (140).

9. The immersion energy storage device according to claim 1, wherein output terminals of two adjacent battery modules (200) are directly opposite to each other in the first direction, and the two bending structures (110) of the connector (100) are fixedly connected to the output terminals of the two adjacent battery modules (200), respectively.

10. The immersion energy storage device according to claim 1, wherein the insulating structure (130) is formed by injection molding, and the insulating structure (130) is detachably fixed to the bending structure (110).

11. The immersion energy storage device according to claim 1, wherein a positive output terminal and a negative output terminal of two adjacent battery modules of the at least two battery modules are directly opposite to each other in the first direction, and the connector is configured to connect the positive output terminal and the negative output terminal of the two adjacent battery modules.

12. The immersion energy storage device according to claim 3, wherein the first direction is a vertical direction, the second direction is a front-to-back direction, and the fourth bending portion extends downward in the vertical direction.

13. The immersion energy storage device according to claim 3, wherein the fourth bending portion extends upward in a vertical direction.

14. The immersion energy storage device according to claim 1, wherein each battery module includes two groups of battery cells, a connection member, and two busbars, each of the two busbars corresponds to one of the two groups of battery cells, and a first terminal of the connection member is connected to a negative output terminal of one of the two busbars, and a second terminal of the connection member is connected to a positive output terminal of the other of the two busbars.

15. The immersion energy storage device according to claim 5, a recess wall opposite to the fourth bending portion in the second accommodation recess in the positioning member is provided with a first threaded blind hole; the first threaded blind hole is in coaxial communication with the first threaded through hole and the second threaded through hole; and the fixing bolt is configured to threadedly pass through the first threaded through hole and the second threaded through hole in sequence and threadedly fixed to the first threaded blind hole.
